(19) Europäisches Patentamt / European Patent Office / Office européen des brevets

(11) **EP 1 912 316 A1**

(12) **EUROPEAN PATENT APPLICATION**
published in accordance with Art. 153(4) EPC

(43) Date of publication:
**16.04.2008 Bulletin 2008/16**

(51) Int Cl.:
*H02K 16/02* (2006.01)          *H02K 11/00* (2006.01)
*H02K 21/16* (2006.01)          *H02K 21/22* (2006.01)

(21) Application number: **06811480.0**

(22) Date of filing: **10.10.2006**

(86) International application number:
**PCT/JP2006/320167**

(87) International publication number:
**WO 2007/043506 (19.04.2007 Gazette 2007/16)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.10.2005 JP 2005298637**

(71) Applicant: **MATSUSHITA ELECTRIC INDUSTRIAL CO., LTD.**
**Osaka 571-8501 (JP)**

(72) Inventors:
• **KOSHIBA, Atsuyoshi c/o Matsushita Electric Ind.**
  **Chuo-ku, Osaka-shi, Osaka 540-8207 (JP)**
• **HIWAKI, Hideharu c/o Matsushita Electric Ind.**
  **Chuo-ku, Osaka-shi, Osaka 540-8207 (JP)**
• **MURAKAMI, Hirosi c/o Matsushita Electric Ind.**
  **Chuo-ku, Osaka-shi, Osaka 540-8207 (JP)**
• **YOSHIKAWA, Yuichi c/o Matsushita Electric Ind.**
  **Chuo-ku, Osaka-shi, Osaka 540-8207 (JP)**

(74) Representative: **Pautex Schneider, Nicole Véronique et al**
**Novagraaf International SA**
**25, avenue du Pailly**
**1220 Les Avanchets - Geneva (CH)**

(54) **MOTOR WITH TWO ROTORS**

(57) A motor includes a stator, a first rotor and a second rotor. The stator has a plurality of outer teeth projecting outward from an annular stator yoke, a plurality of inner teeth projecting inward from the stator yoke, and windings wound on both of the teeth. Instead of providing both of the teeth with the windings, toroidal windings can be wound on the stator yoke at each section sandwiched between the slots, which stator yoke is disposed between each one of the inner slots and corresponding each one of the outer slots. This motor is structured such that the phases of cogging torque and torque ripple existing between the stator and the second rotor can be reversed with respect to the phases of cogging torque and torque ripple existing between the stator and the first rotor.

FIG. 1

EP 1 912 316 A1

**Description**

**TECHNICAL FIELD**

The present invention relates to a motor to be mounted to home appliances, and more particularly, it relates to a structure of a motor having two rotors for one stator.

**BACKGROUND ART**

To reduce cogging torque or torque ripple, various ideas have been proposed. For instance, unexamined Japanese Patent Application Publication No. H11 - 234930 discloses the following idea: magnets mounted to a rotor are shaved into an arc shape for reducing harmonic component of magnetic flux density in air-gap, or a combination of the number of magnetic poles and that of slots are studied for designing a better magnetic circuit.
Several methods for reducing the cogging torque and the torque ripples have been proposed, for instance, a method of providing the magnetization of the rotor magnets or the layers of the stator core with a skew, or a method of shaving the magnets mounted to the rotor into an arc shape, or a method of modifying the shape of stator through beveling. However, use of any one of the foregoing methods lowers a torque constant of the motor.

**DISCLOSURE OF INVENTION**

A motor of the present invention includes a stator, a first rotor and a second rotor. The stator comprises the following elements:

an annular stator yoke;
a plurality of outer teeth projecting outward from the stator yoke;
a plurality of inner teeth projecting inward from the stator yoke; and
windings wound on the outer teeth and the inner teeth.

The first rotor is held by a shaft, and includes a first permanent magnet mounted on its outer wall, and confronts the inner teeth via air-gap in between, and rotates on the shaft. The second rotor is also held by the shaft, and includes a second permanent magnet mounted on its inner wall, and confronts the outer teeth via air-gap in between, and rotates on the shaft. The phase of second cogging torque existing between the stator and the second rotor is reversed with respect to the phase of first cogging torque existing between the stator and the first rotor. Also with respect to the phase of first torque ripple occurring between the stator and the first rotor, the phase of second torque ripple occurring between the stator and the second rotor is reversed. This structure allows the motor of the present invention to reduce the cogging torque and the torque ripple of the motor as a whole.

**BRIEF DESCRIPTION OF DRAWINGS**

Fig. 1 schematically illustrates a motor in accordance with a first embodiment of the present invention.
Fig. 2 shows cycles of cogging torque and torque ripple, and an average torque when an open angle of the inner teeth and that of the outer teeth are varied at the same angle intervals.
Fig. 3 shows the cycle of the cogging torque, shown in Fig. 2, decomposed into the respective components of the first rotor and the second rotor.
Fig. 4 shows the cycle of the torque ripple, shown in Fig. 2, decomposed into the respective components of the first rotor and the second rotor.
Fig. 5 shows relations between the average torque and the teeth open angle of the first rotor and the second rotor respectively.
Fig. 6 shows respective cogging torque of the first rotor, the second rotor, and the motor per se, of the motor shown in Fig. 1.
Fig. 7 shows respective torque ripple of the first rotor and the second rotor of the motor shown in Fig. 1.
Fig. 8 schematically illustrates the open angles of the inner teeth and the outer teeth of the motor in accordance with the first embodiment of the present invention.
Fig. 9 schematically illustrates a motor in accordance with a second embodiment of the present invention.
Fig. 10 schematically illustrates a motor in accordance with a third embodiment of the present invention.

## DESCRIPTION OF REFERENCE MARKS

| 10 | stator |
|---|---|
| 11 | stator core |
| 12 | outer teeth |
| 13 | inner teeth |
| 14 | stator yoke |
| 15, 45, 55 | outer slot |
| 16, 46, 56 | inner slot |
| 20 | first rotor (inner rotor) |
| 30 | second rotor (outer rotor) |
| 41 | first permanent magnet |
| 42 | second permanent magnet |
| 50 | toroidal winding |
| 60 | shaft |

## DESCRIPTION OF PREFERRED EMBODIMENTS

Exemplary embodiments of the present invention are demonstrated hereinafter with reference to the accompanying drawings.

## EMBODIMENT 1

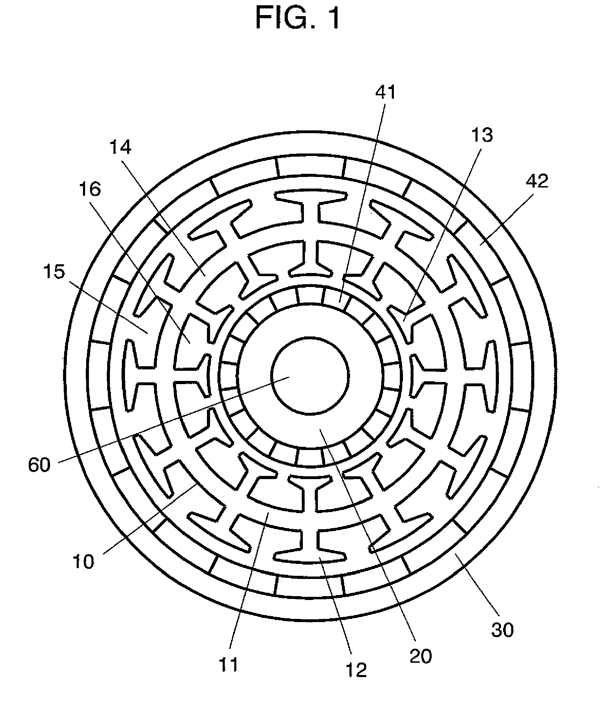

Fig. 1 schematically illustrates a motor in accordance with the first embodiment of the present invention. A major structure of the first embodiment is described with reference to Fig. 1.

In Fig. 1, the motor in accordance with the first embodiment includes stator 10, first rotor 20, and second rotor 30. Stator 10 comprises the following elements:

annular stator yoke 14;
a plurality of outer teeth 12 projecting outward from stator yoke 14;
a plurality of inner teeth 13 projecting inward from stator yoke 14; and
windings (not shown) wound on outer teeth 12 and inner teeth 13.

First rotor 20 is held by shaft 60, and includes first permanent magnet 41 mounted on its outer wall, and confronts inner teeth 13 via air-gap in between, and rotates on shaft 60. Second rotor 30 is also held by shaft 60, and includes second permanent magnets 42 mounted on its inner wall, and confronts outer teeth 12 via air-gap in between, and rotates on shaft 60. The phase of second cogging torque existing between stator 10 and second rotor 30 is reversed with respect to the phase of first cogging torque existing between stator 10 and first rotor 20. Also with respect to the phase of first torque ripple occurring between stator 10 and first rotor 20, the phase of second torque ripple occurring between stator 10 and second rotor 30 is reversed. This structure allows the motor in accordance with the first embodiment to reduce the cogging torque and the torque ripple of the motor as a whole.

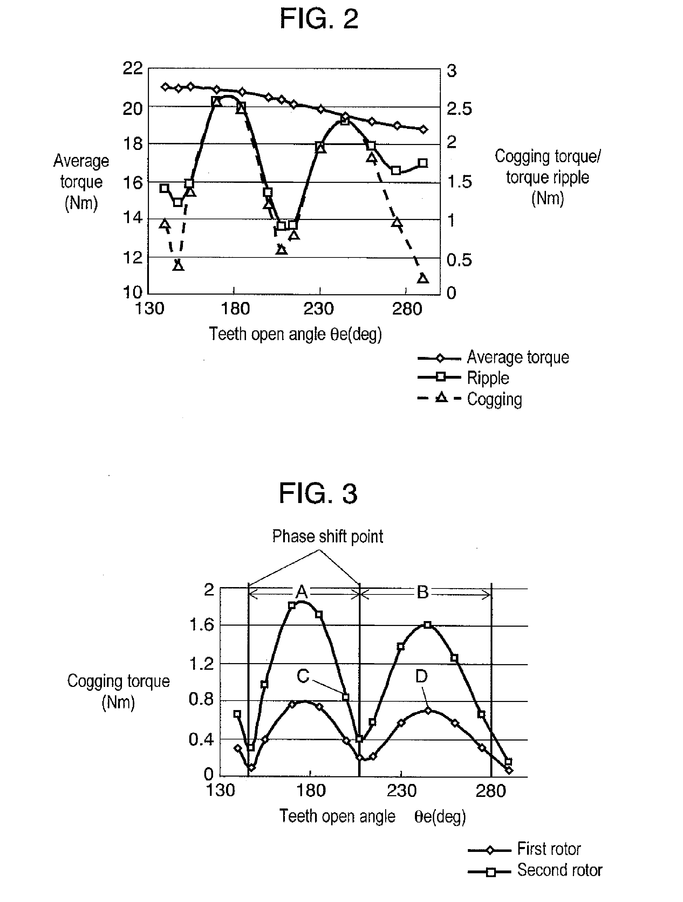

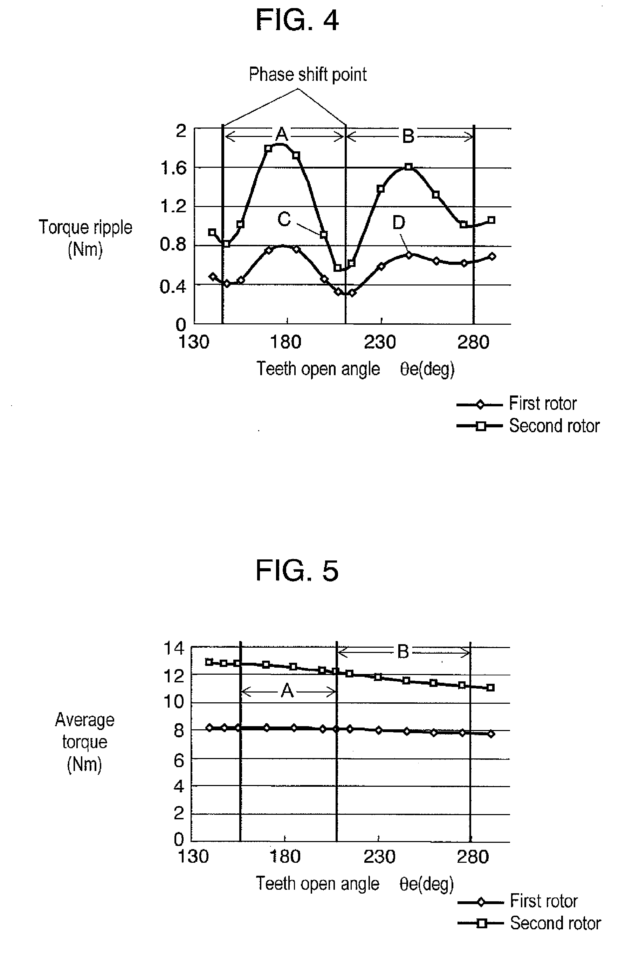

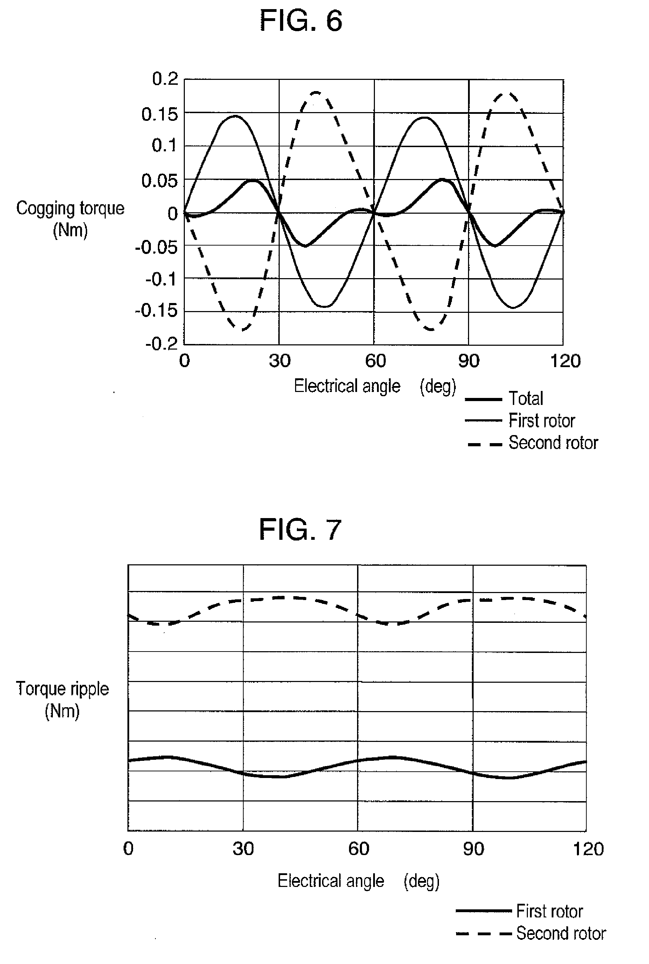

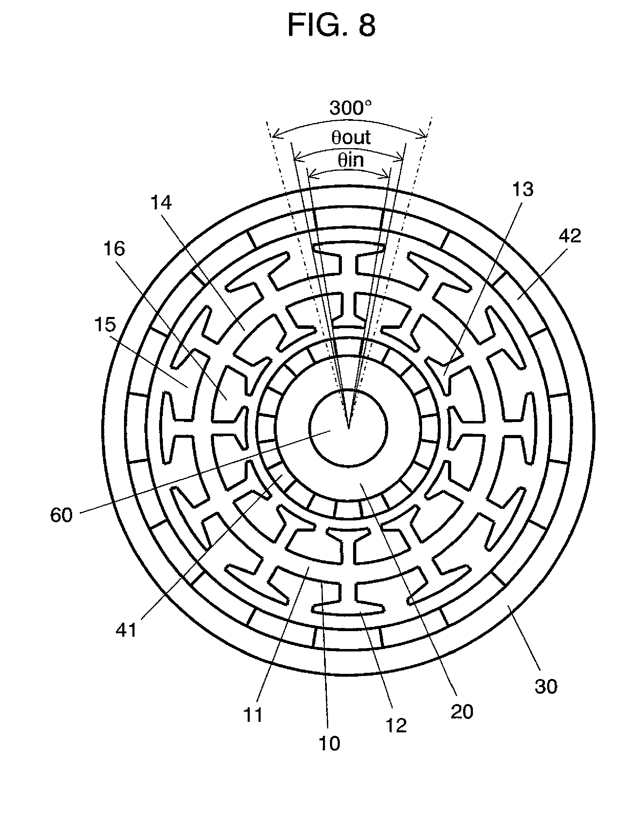

The motor shown in Fig. 1 and in accordance with this first embodiment is further detailed hereinafter. Fig. 2 shows cycles of cogging torque and torque ripple, and an average torque when an open angle of the inner teeth and that of the outer teeth are varied with the same angle intervals. Fig. 3 shows the cycle of the cogging torque, shown in Fig. 2, decomposed into the respective components of the first rotor (inner rotor) and the second rotor (outer rotor). Fig. 4 shows the cycle of the torque ripple, shown in Fig. 2, decomposed into the respective components of the first rotor (inner rotor) and the second rotor (outer rotor). Fig. 5 shows relations between the average torque and the teeth open angle of the first rotor (inner rotor) as well as the second rotor (outer rotor) respectively. Fig. 6 shows respective cogging torque of the first rotor, the second rotor, and the motor as a whole, of the motor shown in Fig. 1. Fig. 7 shows respective torque ripple of the first rotor and the second rotor of the motor shown in Fig. 1. Fig. 8 schematically illustrates the open angles both of the inner teeth and the outer teeth of the motor in accordance with the present invention.

In Fig. 1 and Fig. 8, stator core 11 comprises the following elements: annular stator yoke 14; a plurality of outer teeth 12 projecting outward from stator yoke 14; and a plurality of inner teeth 13 projecting inward from stator yoke 14. Outer slot 15 is formed between each one of outer teeth 12, and inner slot 16 is formed between each one of inner teeth 13. Windings (not shown) are wound on outer teeth 12 and inner teeth 13. Stator 10 is thus formed of annular stator yoke 14, outer teeth 12, inner teeth 13, and the windings (not shown) wound on outer teeth 12 and inner teeth 13.

First rotor (inner rotor) 20 confronts the inner wall of stator 10 via a slight air-gap in between, and is held by shaft 60 such that it can rotate on shaft 60. Second rotor (outer rotor) 30 confronts the outer wall of stator 10 via a slight air-gap in between, and is held by shaft 60 such that it can rotate on shaft 60.

First rotor 20 has first permanent magnet 41 mounted on its outer wall, which magnet 41 is formed of 20 pieces of magnet. These magnet pieces are magnetized "N" and "S" alternately and forms an annular shape. First rotor 20 thus has 20 poles.

Second rotor 30 has second permanent magnet 42 mounted on its inner wall, which magnet 42 is formed of 20 pieces of magnet. These magnet pieces are magnetized "N" and "S" alternately and forms an annular shape. Second rotor 30 thus has 20 poles. In other words, first rotor 20 and second rotor 30 have the same number of poles, i.e. 20 poles.

In stator 10, outer slots 15 are formed between each one of outer slots 12, and the number of slots 15 amounts to 12. Inner slots 16 are formed between each one of inner teeth 13, and the number of slots 16 amounts to also 12. In other words, both of outer slot 15 and inner slot 16 have 12 slots respectively.

As discussed above, the motor in accordance with the first embodiment includes first rotor 20 and second rotor 30 both having 20 poles respectively, and stator 10 having 12 slots. In this case, as shown in Fig. 8, the slots are arranged at intervals of 30° in mechanical angles and 300° in electrical angles. In Fig. 8, open angle θin is formed by the two lines running at both the ends of each one of inner teeth 13 and crossing with each other at the center of shaft 60, and open angle θout is included between two lines running at both the ends of each one of outer teeth 12 and crossing with each other at the center of shaft 60.

Fig. 2 shows each cycle of the wave heights of cogging torque, torque ripple, and an average torque, when open angle θin of the inner teeth and open angle θout of the outer teeth are varied with the same angle intervals. In Fig. 2, X axis represents teeth open angle θe which is an electrical angle produced by varying both of open angle θin of inner teeth 13 and open angle θout of outer teeth 12.

Fig. 3 shows the cycle of the wave heights of the cogging torque, shown in Fig. 2, which cycle are decomposed into the respective components of first rotor 20 (inner rotor) and second rotor 30 (outer rotor). Fig. 4 shows the cycle of the wave heights of the torque ripple, shown in Fig. 2, which cycle is decomposed into the respective components of first rotor 20 (inner rotor) and second rotor 30 (outer rotor).

As Fig. 3 and Fig. 4 tell, the cogging torque and the torque ripple of first rotor 20 and second rotor 30 draw the waveforms having maximum points and minimum points. One of the minimum points exists at the vicinity of 210° of teeth open angle θe, and one of the maximum points exists at the vicinity of 250° of teeth open angle θe.

In Fig. 3 and Fig. 4, the border between range A and range B is a phase shift point, e.g. the vicinity of 210° of teeth open angle θe. Point C in Fig. 3 and Fig. 4 is set as a teeth open angle at approx. 200 ° of the second rotor (outer rotor), and point D is set as a teeth open angle at approx. 250° of the first rotor (inner rotor).

Fig. 5 shows relations between an average torque and a teeth open angle of first rotor 20 (inner rotor) and second rotor 30 (outer rotor) respectively. The relations are produced by selecting the wave height of the cogging torque and that of the torque ripple at a teeth open angle at which the phase of the wave height of the cogging torque and that of the torque ripple are reversed.

As Fig. 5 tells that respective average torques of first rotor 20 (inner rotor) and second rotor 30 (outer rotor) are preferably selected such that teeth open angles θin and θout fall within the range of approx. 140° - 290°. Because if the teeth open angles fall outside the foregoing range, the average torque extremely lowers, and it is thus impossible to maintain high torque.

Selection of the teeth open angle at the point, where the phases of cogging torque and torque ripple are reversed, allows minimizing the cogging torque and the torque ripple of the motor as a whole with a high torque constant maintained.

For instance, when the teeth open angle of first rotor 20 falls within the range A shown in Fig.3 and Fig. 4, selection of the teeth open angle of second rotor 30 within range B shown in Fig. 3 and Fig. 4 allows minimizing the cogging torque and the torque ripple of the motor as a whole with a high torque constant maintained.

To the contrary, when the teeth open angle of first rotor 20 falls within the range B shown in Fig.3 and Fig. 4, selection of the teeth open angle of second rotor 30 within range A shown in Fig. 3 and Fig. 4 allows minimizing the cogging torque and the torque ripple of the motor as a whole with a high torque constant maintained.

In this first embodiment, specifically, the open angle of inner teeth 13 can be set at point D within range B, i.e. approx. 250°, and the open angle of outer teeth 12 can be set at point C within range A, i.e. approx. 200°. As discussed above, the open angle of respective inner teeth and that of respective outer teeth can be set at given values, namely, at approx. 250° and approx. 200°.

Teeth open angle θout of second rotor 30 can be thus set at a value within range A and 0.8[N-m] on Y-axis, and that of first rotor 20 can be set at a value within range B and 0.8[N-m] on Y-axis. A phase reversing point can be selected within the smallest possible range of amplitude in order to minimize the cogging torque and the torque ripple of the entire motor. This selection allows suppressing an adverse effect of poorly accurate combination, if any, between the first rotor with the second rotor on the cogging torque and the torque ripple of the entire motor.

It is preferable to select a teeth open angle in response to the highest possible torque constant (average torque). This selection allows reducing the cogging torque and the torque ripple of the motor as a whole with a high output maintained.

Considering an error due to poorly accurate assembly, it should be avoided setting the open angle at the vicinity of a phase shift point (minimum point), e.g. approx. 210° in Fig. 3 or Fig. 4, where a phase changes. Because a selection of a teeth open angle at the vicinity of a phase shift point (minimum point) will reverse the positive and negative direction of the torque constant (average torque), so that first rotor 20 and second rotor 30 receive the adverse effect of the cogging torque and the torque ripple along the same direction at the vicinity of the minimum point. This mechanism does not reduce but adversely amplify the cogging torque and the torque ripple of the entire motor. The setting of point C at approx. 200° instead of approx. 210°, where the phase changes, prevents the foregoing amplification.

Fig. 6 shows the cogging torque of the entire motor when the teeth open angle is selected at the point where both of the phases of cogging torque produced by first rotor 20 (inner rotor) and second rotor 30 (outer rotor) are reversed. Fig. 7 shows the total torque ripple of the motor when the teeth open angle is selected at the point where both of the phases of torque ripple produced by first rotor 20 (inner rotor) and second rotor 30 (outer rotor) are reversed. To be more specific, point D, i.e. approx. 250°, is selected for first rotor 20 (inner rotor), and point C, i.e. approx 200°, is selected for second rotor 30 (outer rotor).

As Fig. 6 and Fig. 7 tell, the cycles of both the cogging torque and the torque ripple produced due to the positional relation between the stator and the rotor including first rotor 20 and second rotor 30 are canceled out and minimized.

The structure discussed above; however, also works without windings on either one of outer slots 15 or inner slots 16, in other words, the motor without windings on outer teeth 12 or inner teeth 13 can work and produce an advantage similar to what is discussed above.

## EMBODIMENT 2

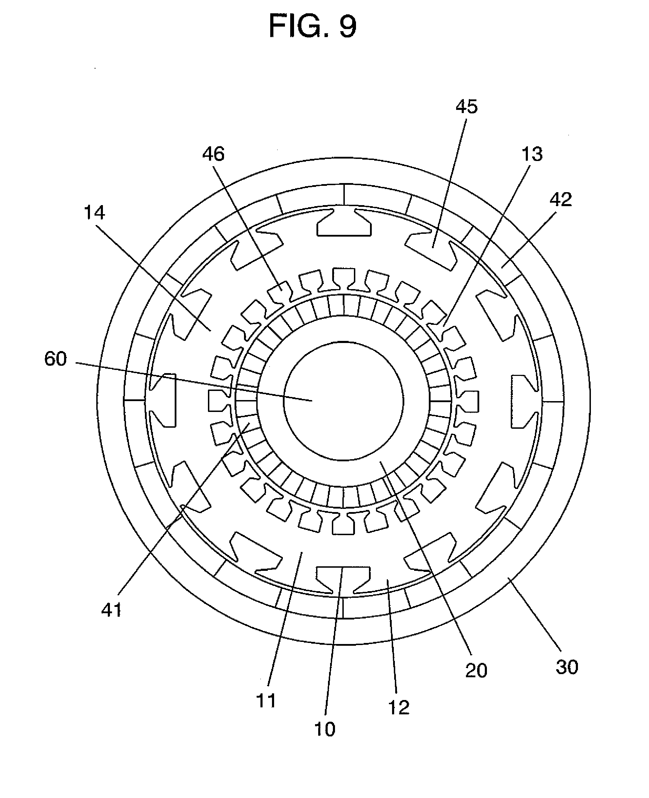

Fig. 9 schematically illustrates a motor in accordance with the second embodiment. In Fig. 9, the motor in accordance with the second embodiment includes the major elements used in the first embodiment. The motor also has a combination between the number of magnetic pieces forming first permanent magnet 41 used in the first embodiment and the number of inner slots 46 formed by inner teeth 13, and another combination between the number of magnetic pieces forming second permanent magnet 42 and the number of outer slots 45 formed by outer teeth 12. However, these two combination patterns are different from each other.

To be more specific, a first combination pattern is this: First permanent magnet 41 is formed of 40 magnet pieces, and inner teeth 13 forms 24 inner slots 46. A second combination pattern is this: second permanent magnet 42 is formed of 20 magnet pieces, and outer teeth 12 forms 12 outer slots 45. The motor in accordance with the second embodiment has the different combination patterns as discussed above.

The structure discussed above allows changing the cycle of cogging torque and the cycle (the number of ripples) of the torque ripple of either one of the outer rotor or the inner rotor, so that the cogging torque and the torque ripple of the entire motor can be reduced.

Cogging torque Tcog of the entire motor is expressed in the following equation:

$$T_{cog} = T_{i-cog} + T_{o-cog}$$
$$= T_i \, sin \, N\theta + T_o \, sin \, N \, (\theta + \Phi) \cdots (1)$$

where: Tcog is the cogging torque of the motor,

To-cog is the cogging torque of second (outer) rotor 30,
Ti-cog is the cogging torque of first (inner) rotor 20,
Ti is amplitude of the cogging torque of the inner rotor,
To is amplitude of the cogging torque of the outer rotor,
N is the least common multiple of the number of slots and poles,
$\theta$ is a rotor position (rotary angle), and
$\phi$ is a phase difference between Ti-cog and To-cog.

The cogging torque Tcog of the motor is expressed in the sum of Ti-cog and To-cog, so that the condition under Ti = To = T and a phase reversing combination between Ti-cog and To-cog allows achieving cogging torque Tcog = 0 as expressed in equation (2).

$$T_{cog} = T sin N\theta + T sin N(\theta + \pi) = 0 \quad \cdots (2)$$

**EMBODIMENT 3**

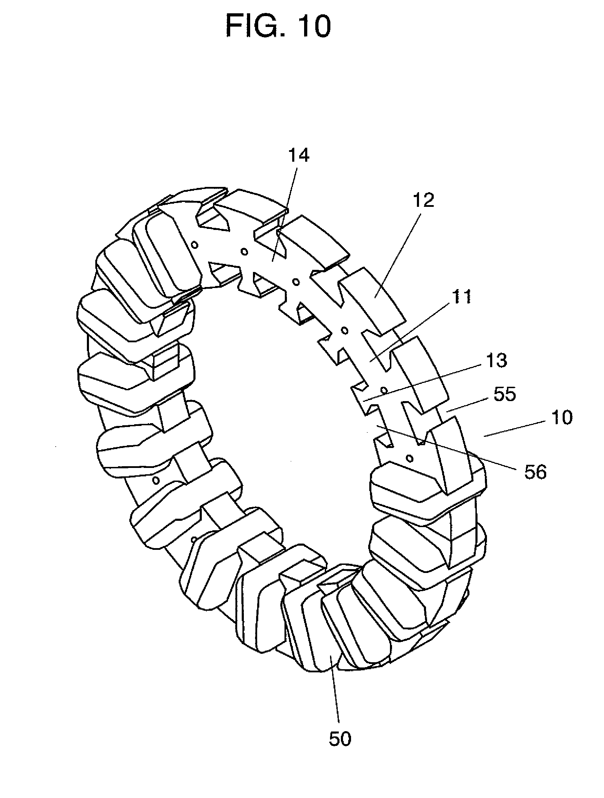

Fig. 10 shows a perspective view of stator 10 and toroidal windings 50 wound on stator yoke 14 at each section sandwiched between the slots of stator core 11 of the motor in accordance with this third embodiment. In Fig. 10, the motor in accordance with the third embodiment includes the major elements used in the first embodiment, and the same number of outer slots 55 of outer teeth 12 as that of inner slots 56 of inner teeth 13. Instead of winding the windings on outer teeth 12 and inner teeth 13 as described in the first embodiment, toroidal windings 50 are wound on stator yoke 14 at each section sandwiched between the slots, which stator yoke 14 is seated between inner slots 56 and corresponding outer slots 55.

The motor in accordance with this third embodiment is expected to produce a similar advantage to what is produced by the motor used in the first embodiment. On top of that, toroidal windings 50 wound on stator yoke 14 produce the following advantages, i.e. smaller radial force and a greater coil end. As a result, the motor in accordance with the third embodiment can achieve lower noises and lower vibrations.

**INDUSTRIAL APPLICABILITY**

A motor of the present invention is used, e.g. in home appliances, and useful for the application which needs lower noises and lower vibrations.

**Claims**

1. A motor comprising:

   a stator including:

   an annular stator yoke;
   a plurality of outer teeth projecting outward from the stator yoke;
   a plurality of inner teeth projecting inward from the stator yoke; and
   windings wound on the outer teeth and the inner teeth;

   a first rotor held by a shaft, having a first permanent magnet mounted on outer wall thereof, confronting the inner teeth via air-gap in between, and rotating on the shaft; and
   a second rotor held by the shaft, having a second permanent magnet mounted on inner wall thereof, confronting the outer teeth via air-gap in between, and rotating on the shaft,

   wherein with respect to a phase of first cogging torque existing between the stator and the first rotor, a phase of second cogging torque existing between the stator and the second rotor is reversed, and a phase of second torque ripple occurring between the stator and the second rotor is reversed with respect to a phase of first torque ripple occurring between the stator and the first rotor, and cogging torque and torque ripple of the motor as a whole are reduced.

2. The motor of claim 1, wherein an open angle of each one of the inner teeth and an open angle of each one of the outer teeth are set at a predetermined value.

3. The motor of claim 1, wherein a combination pattern between a number of magnet pieces forming the first permanent magnet and a number of inner slots formed by the inner teeth is different from a combination pattern between a number of magnet pieces forming the second permanent magnet and a number of outer slots formed by the outer teeth.

4. The motor of claim 1, wherein a number of the outer slots of the outer teeth and a number of the inner slots of the inner teeth are set at an identical number, and the windings are not wound on the outer teeth or the inner teeth, but toroidal windings instead are wound on the stator yoke at each section sandwiched between the slots, which stator yoke is disposed between the inner slots and the outer slots corresponding to the inner slots.

## FIG. 1

# FIG. 2

Average
torque
(Nm)

Cogging torque/
torque ripple
(Nm)

Teeth open angle θe(deg)

—◇— Average torque
—□— Ripple
— △ — Cogging

# FIG. 3

Phase shift point

A
B
C
D

Cogging torque
(Nm)

Teeth open angle   θe(deg)

—◇— First rotor
—□— Second rotor

9

# FIG. 4

Phase shift point

Torque ripple (Nm)

Teeth open angle θe(deg)

——◇—— First rotor
——□—— Second rotor

# FIG. 5

Average torque (Nm)

Teeth open angle θe(deg)

——◇—— First rotor
——□—— Second rotor

# FIG. 6

# FIG. 7

# FIG. 8

# FIG. 9

# FIG. 10

## INTERNATIONAL SEARCH REPORT

| International application No. |
| --- |
| PCT/JP2006/320167 |

A.  CLASSIFICATION OF SUBJECT MATTER
*H02K16/02*(2006.01)i, *H02K11/00*(2006.01)i, *H02K21/16*(2006.01)i, *H02K21/22*
(2006.01)i

According to International Patent Classification (IPC) or to both national classification and IPC

B.  FIELDS SEARCHED

Minimum documentation searched (classification system followed by classification symbols)
H02K16/02, H02K11/00, H02K21/16, H02K21/22

Documentation searched other than minimum documentation to the extent that such documents are included in the fields searched
Jitsuyo Shinan Koho            1922-1996   Jitsuyo Shinan Toroku Koho    1996-2006
Kokai Jitsuyo Shinan Koho      1971-2006   Toroku Jitsuyo Shinan Koho    1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2001-37133 A  (Matsushita Electric Industrial Co., Ltd.), 09 February, 2001 (09.02.01), Par. No. [0028]; Fig. 11 (Family: none) | 1-4 |
| Y | Microfilm of the specification and drawings annexed to the request of Japanese Utility Model Application No. 176355/1984(Laid-open No. 92155/1986) (Sanyo Electric Co., Ltd.), 14 June, 1986 (14.06.86), (Family: none) | 1-4 |
| Y | JP 2000-78820 A  (Tamagawa Seiki Co., Ltd.), 14 March, 2000 (14.03.00), (Family: none) | 1-4 |

☐  Further documents are listed in the continuation of Box C.          ☐  See patent family annex.

| | |
| --- | --- |
| *     Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
|       25 December, 2006 (25.12.06) |       09 January, 2007 (09.01.07) |

| Name and mailing address of the ISA/ | Authorized officer |
| --- | --- |
|       Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11234930 B